# EUROPEAN PATENT APPLICATION

(11) **EP 4 795 920 A1**
(43) Date of publication of application: **26.08.2026**
(21) Application number: 25210544.0
(22) Date of filing: 22.10.2025
(51) Int. Cl.: A01D 43/08, A01D 90/04, A01F 15/10

(54) **CROP CUTTING DEVICE SENSOR ARRANGEMENT**

(30) Priority: 21.02.2025 EP 25159484
(71) Applicant: CNH Industrial Belgium N.V., 8210 Zedelgem (BE)
(72) Inventor: Liefooghe, Dries, 8210 Zedelgem (BE); Devroe, Jeroen, 8210 Zedelgem (BE)
(74) Representative: CNH Industrial IP Department

(57) **Abstract**

A crop cutting device (6) for an agricultural machine (2) according to the present invention comprises a plurality of knives (14), an actuating mechanism (22) for rotating a predetermined number of knives (14) of the plurality of knives (14) between a retracted position and an extended position, and a sensor arrangement comprising a plurality of sensors (60, 78, 82, 86) configured to monitor at least a configuration of the crop cutting device (6), in particular a configuration of the plurality of knives (14) and a configuration of the actuating mechanism (22).

## Description

The present invention relates to a crop cutting device for an agricultural machine, such as a square baler, a round baler, a forage wagon, a forage harvester or the like.

Agricultural harvesting machines are known, which pick up crop material from a field and process the crop material within the machine. These agricultural machines may comprise a pickup unit for collecting the crop material from the field and a crop cutting device for cutting the collected crop material to a desired size. The crop cutting device comprises a plurality of knives arranged next to each other in a direction perpendicular to a crop transport path through the crop cutting device. An actuating mechanism of the crop cutting device may be provided to rotate a predetermined number of knives of the plurality of knives between a retracted position and an extended position, in which they extend into the crop transport path. In order to adapt the cutting size, the number of knives extending into the crop transport path and, thus, the distance between the knives can be changed by means of an appropriate selector mechanism. The selector mechanism is usually operated manually and, before doing so, an operator of the agricultural machine has to check whether all of the plurality of knives are in the retracted position. Further, before subsequently operating the actuating mechanism, the operator has to check whether the plurality of knives is in a correct position and the crop cutting device is free of contamination which could possibly block the knives and prevent the selected number of knives to be moved into their extended position. Consequently, the process of selecting and activating a desired number of knives is quite labor and time intensive.

It is therefore an object of the present invention to provide a crop cutting device which allows an operator to quickly and easily select and activate a number of the plurality of knives.

This object is achieved by the subject matter of independent claim 1. Preferred embodiments are subject of the dependent claims.

According to the present invention, a crop cutting device for an agricultural machine comprises a crop guiding surface defining a crop transport path through the crop cutting device, wherein the crop guiding surface has a plurality of slots formed therein, and a plurality of knives pivotally mounted on a knife shaft to be rotatable between a retracted position and an extended position, wherein, in the extended position, the plurality of knives extends further through the plurality of slots and into the crop transport path than in the retracted position. The crop cutting device further comprises an actuating mechanism for rotating a predetermined number of knives of the plurality of knives between the retracted position and the extended position, and a sensor arrangement comprising a plurality of sensors configured to monitor a configuration of the crop cutting device, in particular a configuration of the plurality of knives and/or a configuration of the actuating mechanism.

In this way, a crop cutting device is provided in which the configuration of the crop cutting device is detected and monitored by the plurality of sensors and, therefore, does not need to be checked by a machine operator. The tasks to be fulfilled by the operator can therefore be reduced. The selection and activation processes of the plurality of knives may even be automated at least in part as will be described in greater detail below. Also, misuse and resulting damage of the crop cutting device can be prevented if the latter is operated based on the information provided by the plurality of sensors.

In a manner known in the art, the crop cutting device may also comprise a rotary knife assembly having a plurality of rotary knives mounted on a rotatable shaft. The rotary knife assembly extends into the crop transport path, where the plurality of rotary knives cooperates with the plurality of knives, which, in the extended position, act as stationary counter knives. The extended position of the plurality of knives is therefore also referred to as an operative position. In the retracted position, the knives do not substantially extend into the crop transport path. That is, a cutting edge of the knives may be arranged below the crop guiding surface, within the plurality of slots, or only slightly above the crop guiding surface. However, the plurality of knives do not engage or cooperate with the rotary knife assembly in the retracted position. The retracted position is therefore also referred to as an inoperative position.

The slots of the plurality of slots formed in the crop guiding surface are preferably arranged parallel to each other and to the crop transport path. Each of the plurality of knives is preferably aligned with one slot of the plurality of slots.

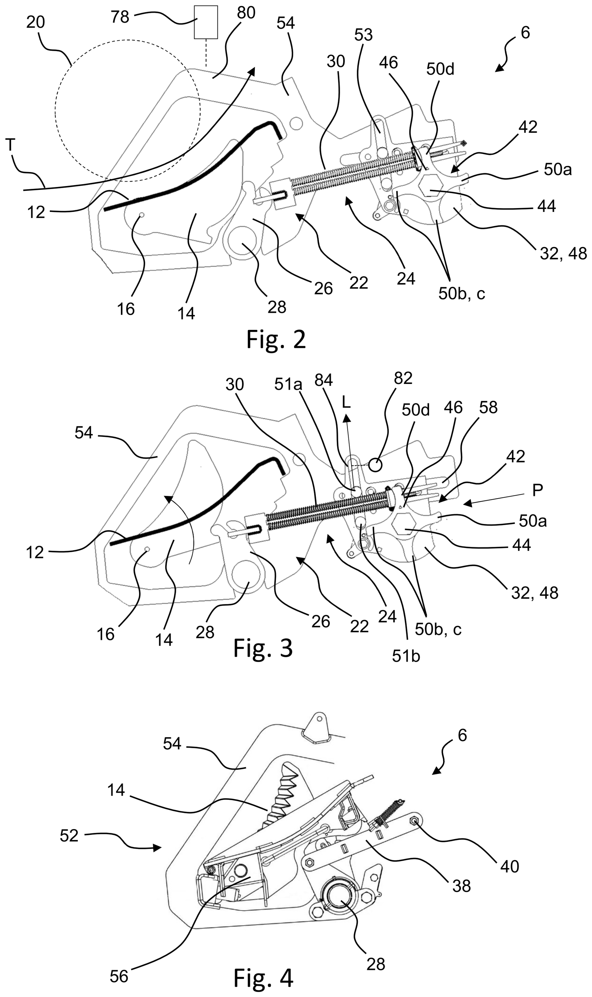

The configuration of the crop cutting device monitored by the sensor arrangement may include a configuration of the actuating mechanism, such as a position or orientation of a component of the actuating mechanism, which may indicate a position of the predetermined number of knives and/or a condition of the actuating mechanism. In a preferred embodiment, the actuating mechanism comprises an actuator and a plurality of operating units acting on the plurality of knives. The actuating mechanism may comprise a transfer mechanism operatively coupling the actuator to the plurality of operating units. For example, the transfer mechanism includes a drive shaft, which may be coupled with the actuator to rotate the drive shaft, a linking mechanism coupled to the drive shaft, a support structure coupled to the linking mechanism, the linking mechanism converting a rotational movement of the drive shaft to a linear movement of the support structure, wherein the plurality of operating units is supported by the support structure. Preferably, one operating unit is associated with each of the plurality of knives. A detailed embodiment of the actuating mechanism will be described with reference to the Fig. 2 to 6.

The crop cutting device preferably comprises a selector mechanism configured to select the predetermined number of knives to be actuated by the actuating mechanism. In this case, the predetermined number of knives is also referred to as a selected number of knives. The configuration of the crop cutting device monitored by the sensor arrangement may include a configuration or setting of the selector mechanism, e.g. by monitoring a position or orientation of a component of the selector mechanism.

Preferably, the selector mechanism is configured to selectively engage with the actuating mechanism, in particular with a predetermined number of operating units of the actuating mechanism in order to actuate the knives associated with these operating units. Therefore, the selector mechanism is preferably configured to couple the actuating mechanism with the predetermined number of knives. The selector mechanism may have a plurality of settings, each setting corresponding to a different predetermined number of knives.

In a preferred embodiment, the selector mechanism comprises a selector shaft and a plurality of engagement elements mounted on the selector shaft and configured to engage with the plurality of operating units of the actuating mechanism. The selector shaft may be supported by the support structure of the actuating mechanism. A detailed embodiment of the selector mechanism will be described with reference to Fig. 2 to 6. For example, the selector shaft may have predefined angular positions, wherein each angular position corresponds to one setting of the selector mechanism in which one predetermined number of knives is selected. Preferably, one engagement element of the plurality of engagement elements is aligned with each of the plurality of operating units of the actuating mechanism. In each of the predefined angular positions of the selector shaft, a different number of engagement elements is arranged to engage with the corresponding operating units. Preferably, when the support structure is linearly moved by operating the actuating mechanism, the selected number of engagement elements engages and moves forward the corresponding operating units, which in turn act on the associated knives to rotate the same about the knife shaft from the retracted position into the extended position.

In an embodiment, the plurality of sensors comprises a first sensor configured to detect a position of at least some of the plurality of knives. In particular, the first sensor is configured to detect if at least some of the plurality of knives are in the retracted position and/or if at least some of the plurality of knives are in the extended position. Preferably, the first sensor is also configured to detect if at least some of the plurality of knives are in an intermediate position between the retracted position and the extended position. The first sensor may be configured to provide an output signal indicative of a position of at least some of the plurality of knives. In this embodiment, the configuration of the crop cutting device monitored by the sensor arrangement includes the position of at least some of the plurality of knives.

Preferably, the crop cutting device comprises only one first sensor for detecting the position of at least some of the plurality of knives. Detecting if at least some of the plurality of knives are in the intermediate position or in the extended position preferably comprises detecting if the predetermined number of knives is in the intermediate position or in the extended position, respectively. The predetermined number of knives corresponds to a selected number of knives, if the selector mechanism is provided.

Advantages of detecting these three positions, i.e. the retracted, intermediate and extended positions, will now be described based on some non-limiting examples. For example, the first sensor detects that all knives of the plurality of knives are in the retracted position. The selector mechanism can then be operated without the operator having to manually check the status of the plurality of knives by himself. On the other hand, if a selected number of knives is actuated to move into the extended position but at least one of these knives is blocked by contamination or the like, the actuating mechanism may not be able to fully extend the selected number of knives. The first sensor would then detect that the selected number of knives is in the intermediate position. This may indicate an error, and the operator can be warned accordingly and/or operation of the actuating mechanism or the crop cutting device may be paused. If, in turn, the first sensor detects that at least one knife is in the extended position, this indicates that actuation of the selected number of knives was successful. In addition, the selector mechanism may be prevented from operation which could cause damage in this situation. Operational safety can thereby be increased.

Preferably, the actuating mechanism comprises a first configuration, in which the plurality of knives is in the retracted position, and a second configuration, in which the predetermined number of knives is in the extended position. The first sensor may be configured to detect if the actuating mechanism is in the first configuration or in the second configuration. The first sensor may also be configured to detect if the actuating mechanism is in an intermediate configuration between the first configuration and the second configuration. By monitoring the actuating mechanism in this way, it is not necessary to detect the position of every single knife of the plurality of knives. The position of at least some of the plurality of knives can be derived from the configuration of the actuating mechanism and, thus, detected by only one first sensor.

Preferably, the actuating mechanism comprises a movable component, in particular a rotatable component, and the first sensor is configured to detect a position of the movable component. The movable component is preferably coupled to the actuator of the actuating mechanism and mounted on the drive shaft.

In general, the first sensor may for example comprise one of a distance sensor and a proximity sensor. The first sensor may thus be realized by means of standard sensors of high availability and cost-efficient design. Non limiting examples of such sensors comprise inductive sensors, capacitive sensors, optical (IR) sensors, magnetic sensors and the like. Alternatively, the first sensor may comprise a rotary encoder configured to detect an angular position of the rotatable component.

The crop cutting device may comprise a frame assembly. In a preferred embodiment, the first sensor is mounted on the movable component and directed towards a detection region on the frame assembly. In the detection region, the frame assembly may have at least two different levels, preferably three different levels. Preferably, the first sensor is directed towards a first level when the movable component is in a first position, is directed towards a second level when the movable component is in a second position, and, if applicable, is directed towards a third level when the movable component is in an intermediate position between the first and second positions. Accordingly, depending on the position of the movable component, the first sensor is arranged at a first distance, a second distance or a third distance from the frame assembly, which distances can be detected by the first sensor.

The crop cutting device may have a first configuration, in which the plurality of knives is rotatable between the retracted position and the extended position by the actuating mechanism, and a second configuration, in which the plurality of knives is not rotatable by the actuating mechanism. Preferably, the plurality of sensors is configured to detect if the crop cutting device is in the first configuration. In this way, important information on the status of the crop cutting device can be provided. Actuation and, thus, damage of the actuating mechanism can be prevented when the crop cutting device is in the second configuration.

For example, in the first configuration of the crop cutting device, the plurality of knives is correctly received within the crop cutting device. The plurality of sensors may then be configured to detect if the plurality of knives is correctly received within the crop cutting device.

In a preferred embodiment, the frame assembly of the crop cutting device comprises a fixed frame and a slidable frame, wherein the slidable frame is slidably mounted on the fixed frame to be movable between a working position and a service position. The fixed frame may be movable, in particular pivotable, between an operating position and a maintenance position. The correct position of the plurality of knives within the crop cutting device may depend on the position of both, the fixed frame and the slidable. The plurality of sensors may therefore be configured to detect the position of the fixed frame and/or the slidable frame.

In the first configuration of the crop cutting device, the slidable frame is in the working position. The plurality of knives is mounted on the slidable frame and, in the working position of the slidable frame, the plurality of knives is correctly received within the crop cutting device. In this case, the plurality of sensors, in particular the first sensor, may be configured to detect if the slidable frame is in the working position.

For example, the detection region of the first sensor may be located on the slidable frame and the first sensor is configured to detect a fourth distance between the first sensor and the slidable frame indicating that the latter is not fully received within the fixed frame. Alternatively, the first sensor may not detect anything within the sensor's detection range and, thus, that the slidable frame is not fully received within the fixed frame.

In one embodiment, the fixed frame is pivotable between an upper operating position and a lower maintenance position. Alternatively, the operating position may be a lower position and the maintenance position may be an upper position. For example, it may be necessary to bring the fixed frame in the maintenance position to allow the slidable frame to be moved into the service position even if a knife is blocked in one of the intermediate or extended positions. Bringing the fixed frame into the maintenance position may also be beneficial for maintenance work, such as cleaning.

In the first configuration of the crop cutting device, the fixed frame is in the operating position and the plurality of knives can be actuated to rotate between the retracted position and the extended position. The plurality of sensors preferably comprises a second sensor configured to detect if the fixed frame is arranged in the operating position. If desired, the second sensor may also be configured to detect if the fixed frame is in the maintenance position.

The second sensor may for example comprise one of a distance sensor and a proximity sensor. The second sensor may thus be realized by means of standard sensors of high availability and cost-efficient design. Non limiting examples of such sensors comprise inductive sensors, capacitive sensors, optical (IR) sensors, magnetic sensors and the like.

For example, the second sensor may be arranged at a first distance to the fixed frame, when the fixed frame is in the operating position, and at a second distance to the fixed frame, when the fixed frame is in the maintenance position. The second sensor may be configured to detect the first and/or second distance or may be configured to detect that, in the operating position, the fixed frame is present within the second sensor's detection range.

The actuating mechanism may have a first arrangement, in which the predetermined number of the plurality of knives to be rotated between the retracted position and the extended position is adjustable, and a second arrangement, in which the predetermined number of the plurality of knives to be rotated between the retracted position and the extended position is not adjustable. In a preferred embodiment including the selector mechanism, in the first arrangement, the actuating mechanism is in a disengaged configuration, in which the actuating mechanism is not engaged with the selector mechanism to allow selection of the predetermined number of knives. In the second arrangement, the actuating mechanism is in an engaged configuration, in which the actuating mechanism is configured to actuate the selected number of knives. The plurality of sensors is preferably configured to detect if the actuating mechanism is in the first arrangement. In one embodiment, the plurality of sensors comprises a third sensor configured to detect if the actuating mechanism is in the disengaged configuration. In this way, information can be provided with respect to the actuating mechanism's configuration which allows operation of the selector mechanism or actuation of the selected number of knives. Operation of the selector mechanism and the actuating mechanism may then only be allowed or initiated if the actuating mechanism is in the respective configuration. It can be guaranteed that the actuating mechanism, in particular the operating units, are disengaged from the selector mechanism before operating the selector mechanism thereby protecting the system from misuse and damage.

Preferably, each of the plurality of operating units of the actuating mechanism is configured to rotate an associated knife of the plurality of knives between the retracted position and the extended position. In the engaged configuration, the plurality of operating units is engaged with the selector mechanism for rotating the predetermined number of knives between the retracted position and the extended position. In the disengaged configuration, the plurality of operating units is disengaged from the selector mechanism to adjust the predetermined number of knives to be rotated by the plurality of operating units. The third sensor may be configured to detect if the plurality of operating units is in the disengaged configuration.

For example, in the disengaged configuration, the plurality of operating units is in a first position, and, in the engaged configuration, the plurality of operating units is in a second position spaced apart from the first position. The plurality of operating units may be moved between the first position and the second position by means of a lifting assembly. The third sensor may be configured to detect if the plurality of operating units is in the first position, in particular by detecting a position of a component of the lifting assembly indicating the position of the plurality of operating units.

The third sensor may, for example, comprise one of a distance sensor and a proximity sensor. The third sensor may thus be realized by means of standard sensors of high availability and cost-efficient design. Non limiting examples of such sensors comprise inductive sensors, capacitive sensors, optical (IR) sensors, magnetic sensors and the like.

Preferably, the third sensor may be arranged on the support structure in which the plurality of operating units is movably supported. The third sensor may be configured to detect that, in the first position, the plurality of operating units and/or the lifting assembly is present within the third sensor's detection range.

In a preferred embodiment, the plurality of sensors further comprises a fourth sensor configured to detect the predetermined number of knives selected by the selector mechanism. In this embodiment, the configuration of the crop cutting device monitored by the sensor arrangement includes the predetermined number of knives selected by the selector mechanism. In this way, an operator can always be aware of the current setting and does not have to visually check the selected number of knives before operating the selector mechanism in order to adjust the same.

Preferably, the fourth sensor is configured to detect an angular position of the selector shaft. As described above, the angular position of the selector shaft corresponds to a setting of the selector mechanism and may be indicative of the predetermined number of selected knives. The selector shaft may have predefined angular positions, each angular position corresponding to one setting of the selector mechanism and, thus, to one number of selected knives. For example, the selector mechanism may have four settings and, therefore, four angular positions, in each of which angular positions a specific number of knives is selected. In this case, the angular positions may be spaced apart by an angle of 90°. The selector shaft may be rotatable between its angular positions.

In general, the fourth sensor may for example comprise one of a distance sensor and a proximity sensor. Non limiting examples of such sensors comprise inductive sensors, capacitive sensors, optical (IR) sensors, magnetic sensors and the like. Alternatively, the fourth sensor may comprise a rotary encoder configured to detect an angular position of the selector shaft.

In a preferred embodiment, a detection member is coupled to or mounted on the selector shaft and the fourth sensor is configured to detect an angular position of the detection member. For example, the detection member may have a plurality of radially extending protrusions, each protrusion corresponding to one setting of the selector shaft. Each of the plurality of protrusions may have a different dimension parallel to a radial direction of the selector shaft and may be aligned with the fourth sensor in the associated angular position of the selector shaft. The fourth sensor may be directed to a tip portion of the protrusion aligned with the fourth sensor and, therefore, be able to detect a distance between said tip portion and the sensor. As a result, the fourth sensor detects a different distance in each of the predefined angular positions of the selector shaft, wherein the detected distance is indicative of the angular position of the selector shaft. In case of an error, the fourth sensor would be directed to a gap between adjacent protrusions and detect a distance which is not associated with any of the selector shaft's predefined angular positions.

In summary, the crop cutting device comprises the plurality of sensors configured to monitor the configuration of the crop cutting device in order to be able to protect the crop cutting device from damage resulting from maloperation and to remotely and/or automatically operate the crop cutting device. In particular, the plurality of sensors may provide all information required to operate the actuating mechanism and the selector mechanism. Preferably, the plurality of sensors therefore comprises the first, second, third and fourth sensors, which are configured to detect the position of at least some of the plurality of knives, the position of the slidable frame, the position of the fixed frame, the configuration of the actuating mechanism, and the predetermined number of knives selected by the selector mechanism, respectively. It is to be noted that the sensors are referred to a first, second, third and fourth sensor only to differentiate between these sensors. However, the sensors may be provided in any desired combination.

The present invention also relates to an agricultural machine, in particular a square baler, a round baler, a forage harvester, or a forage wagon, comprising the crop cutting device according to the present invention. Of course, the agricultural machine is not limited to the ones mentioned. Rather, the person skilled in the art is well aware of other agricultural machines which can make use of the crop cutting device according to the present invention.

The agricultural machine may further comprise a pickup unit for collecting crop material from a field. Within the agricultural machine, the collected crop material is conveyed to and received by the crop cutting device, which is provided to cut the collected crop material to a desired size. Further processing steps may follow depending on the type of machine.

Preferably, the agricultural machine comprises a control unit for controlling the actuating mechanism, wherein the control unit is communicatively coupled to the sensor arrangement, i.e. to the plurality of sensors. The plurality of sensors may be configured to provide status signals indicative of the configuration of the crop cutting device. The control unit is configured to operate the actuating mechanism as a function of the status signals received from the plurality of sensors. Preferably, the control unit is also configured to operate the actuating mechanism as a function of a user input. In this way, the crop cutting device operation may at least be partially automated and/or remotely controlled.

In order to protect the crop cutting device from damage, the control unit is preferably configured to:
Allow operation of the actuating mechanism only when the crop cutting device is in the first configuration associated with the actuating mechanism operation; and
Prevent operation of the actuating mechanism when the crop cutting device is not in the first configuration, e.g. in the second configuration.

For example, the actuating mechanism may be prevented from operation when the slidable frame supporting the plurality of knives is in the service position and/or when the fixed frame is in the maintenance position.

The agricultural machine may further comprise a control unit for controlling the selector mechanism. The control unit for controlling the selector mechanism and the control unit for controlling the actuating mechanism may be the same control unit and, therefore, commonly be referred to as "the control unit". However, it is also conceivable to provide separate control units, that is a first control unit for controlling the actuating mechanism and a second control unit for controlling the selector mechanism. In any case, the control unit for controlling the selector mechanism is communicatively coupled to the plurality of sensors, wherein the control unit is preferably configured to operate the selector mechanism as a function of the status signals provided by the plurality of sensors. Preferably, the control unit for controlling the selector mechanism is also configured to operate the selector mechanism as a function of a user input. In this way, operation of the selector mechanism can be automated.

In order to protect the crop cutting device from damage, the control unit may furthermore be configured to:
Allow operation of the selector mechanism only when the crop cutting device is in a configuration associated with the selector mechanism operation; and
Prevent operation of the selector mechanism when the crop cutting device is not in the configuration associated with the selector mechanism operation.

For example, the selector mechanism may be prevented from operation when the plurality of knives is not positioned in the retracted position and/or when the actuating mechanism is in the second configuration.

Furthermore, the control unit may be configured to provide a graphical user interface (GUI) with information on the crop cutting device status based on the status signals. This may allow an operator to remotely control the crop cutting device, since the relevant information is provided on the GUI.

In one embodiment, the agricultural machine may comprise a remote control and display device, which is communicatively coupled to the control unit and/or the plurality of sensors. Preferably, the remote control and display device comprises the GUI, e.g. in the form of a display on a remote control. The control unit may be configured to operate the crop cutting device based on a user input on the remote control and display device.

Preferred embodiments and advantages of the crop cutting device and the agricultural machine according to the invention will now be described with reference to the attached drawings.
- Fig. 1: is a perspective view of an exemplary agricultural machine in the form of a baler comprising a crop cutting device.
- Fig. 2: is a schematic cross-sectional view of the crop cutting device with an actuating mechanism of the crop cutting device arranged in a first configuration.
- Fig. 3: is a schematic cross-sectional view of the crop cutting device according to Fig. 2 with the actuating mechanism arranged in a second configuration.
- Fig. 4: is a more detailed side view of the crop cutting device according to Fig. 3 with the actuating mechanism arranged in the second configuration.
- Fig. 5: is a side view of the crop cutting device according to Fig. 2-4 from an opposite side with the actuating mechanism arranged in the second configuration.
- Fig. 6: is a side view of the crop cutting device according to Fig. 5 with the actuating mechanism arranged in a third configuration.
- Fig. 7: is a perspective view of the crop cutting device according to Fig. 5 and 6 showing a detection region on a frame assembly of the agricultural machine.
- Fig. 8: is a side view of the crop cutting device according to Fig. 2-6 showing components of a selector mechanism of the crop cutting device.

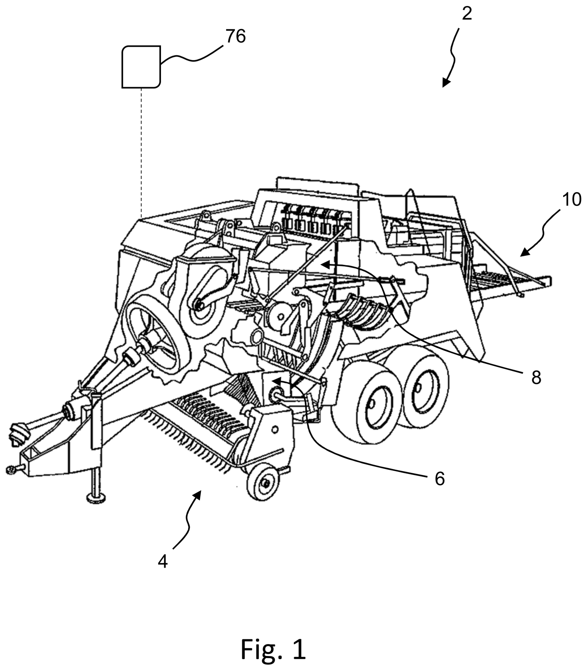

In Fig. 1, an agricultural machine 2, here in the form of but not limited to a square baler, is shown in a perspective view. The agricultural machine 2 may comprise a pick-up unit 4 for collecting harvested crop material from a field, and a crop cutting device 6 according to an embodiment of the present invention. The pick-up unit 4 collects crop material from the field and conveys the collected crop material towards the crop cutting device 6. The crop cutting device 6 receives the collected crop material from the pick-up unit 4 and preprocesses the crop material by cutting it into a desired length. The cut crop material may then be conveyed into a baling chamber 8, where it is compressed and formed into bales before being ejected at a rear end 10 of the baler. The agricultural machine 2 may be a machine towed by a towing vehicle (not shown), such as a tractor, as is the case with square balers, round balers and forage wagons, for example. Alternatively, the agricultural machine 2 may be a self-propelled machine, like a forage harvester.

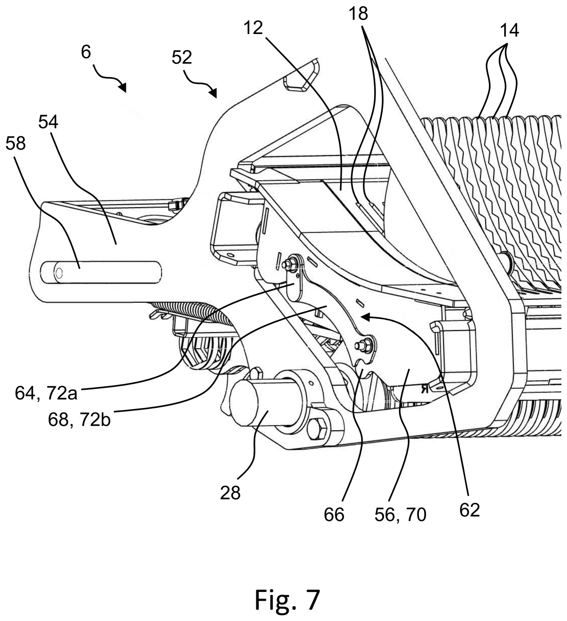

Referring to Fig. 2 to 5, an exemplary embodiment of the crop cutting device 6 will now be described. It is apparent, however, that the present invention is not limited to this embodiment but may be realized in different kinds of crop cutting devices. The crop cutting device 6 receives crop material, which is conveyed through the crop cutting device 6 along a crop transport path indicated by arrow T and defined by a crop guiding surface 12. The crop cutting device 6 comprises a plurality of knives 14 pivotally mounted on a knife shaft 16. The crop guiding surface 12 is provided with a plurality of slots 18 (see Fig. 7), wherein each slot 18 is aligned with one of the plurality of knives 14. The plurality of knives 14 is rotatable about the knife shaft 16 between a retracted position (shown in Fig. 2) and an extended position (shown in Fig. 3-5 and 7). In the extended position, the plurality of knives 14 extends further through the plurality of slots 18 and into the crop transport path T than in the retracted position. The crop cutting device 6 may also comprise a rotary knife assembly 20 indicated by dashed lines in Fig. 2 and extending into the crop transport path T in a known manner. The rotary knife assembly 20 and the plurality of knives 14 cooperate to cut the crop material as it is conveyed along the crop transport path T.

In order to rotate the plurality of knives 14 between the retracted position and the extended position and vice versa, the crop cutting device 6 comprises an actuating mechanism 22. Here, the actuating mechanism 22 comprises a plurality of operating units 24 acting on the plurality of knives 14. Each operating unit 24 may be associated with one of the plurality of knives 14 and comprise a contact element 26 slidably contacting a back side of the associated knife 14 and transferring a force to the knife 14. The contact element 26 may be mounted on a shaft 28 in a freely rotatable manner. Each operating unit 24 may further comprise a spring-loaded rod 30 coupled to the contact element 26 and supported in a support structure 32. As can be seen in Fig. 2 and 3 and indicated by arrow P, the support structure 32 can be moved towards the plurality of knives 14, wherein this movement is transferred to the contact elements 26 via the rods 30, thereby causing the contact elements 26 to rotate about the shaft 28. As a result of this rotation, the contact elements 26 push the plurality of knives 14 into the extended position.

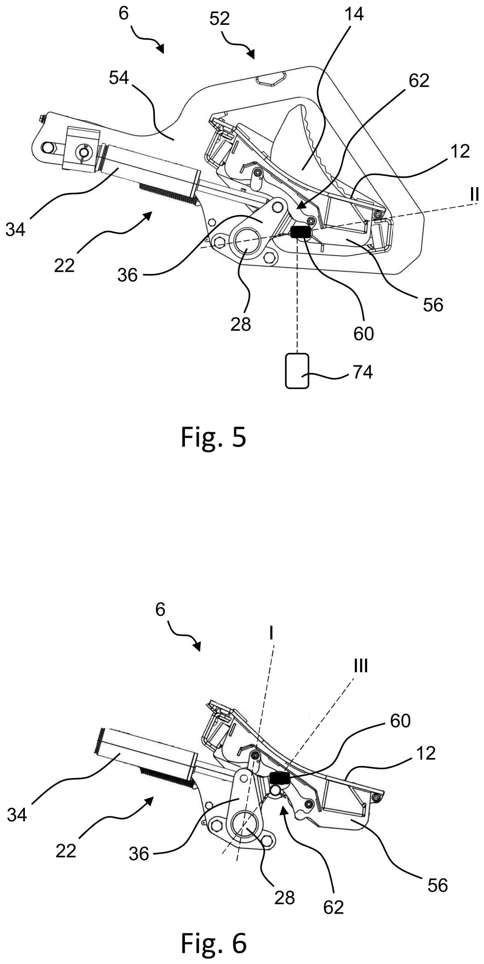

The actuating mechanism 22 may further comprise an actuator 34, e.g. in the form of a hydraulic or pneumatic cylinder assembly, coupled to a movable component 36 (see Fig. 5). Preferably, the movable component 36 is a rotatable component 36 supported in one end region of the shaft 28. The actuator 34 is coupled to the rotatable component 36 eccentrically with respect to a shaft axis such that the shaft 28 can be rotatably driven by the actuator 34. The shaft 28 is thus also referred to as a drive shaft 28. As can be seen in Fig. 4, a linking mechanism 38 of the actuating mechanism 22 may be mounted in an opposite end region of the drive shaft 28 and be configured to convert a rotational movement of the drive shaft 28 into a linear movement of the support structure 32, which may be coupled to the linking mechanism 38 at a free end 40 of the linking mechanism 38.

To select a certain number of knives 14 to be rotated between the retracted position and the extended position, the crop cutting device 6 may be provided with a selector mechanism 42. The selector mechanism 42 is configured to select a predetermined number of knives 14 to be actuated by the actuating mechanism 22. The selector mechanism 42 may selectively engage a desired number of the plurality of operating units 24. In this embodiment, the selector mechanism 42 comprises a selector shaft 44 and a plurality of engagement elements 46 mounted on the selector shaft 44 and configured to engage with the plurality of operating units 24. The selector shaft 44 may be supported in the support structure 32, in particular in a left and a right side plate 48 of the support structure 32.

As can be seen in Fig. 2 and 3, each engagement element 46 may have a plurality of arms 50a-d, wherein each arm 50 is configured to engage with one of the operating units 24, in particular with the spring-loaded rod 30 thereof. An operating unit 24 will only be moved together with the support structure 32 and rotate the corresponding knife 14 when an arm 50 of an engagement element 46 engages the operating unit 24. If, however, an engagement element 46 does not have an arm 50 in a specific angular position of the selector shaft 44, it will not engage the operating unit 24 and, therefore, the corresponding knife 14 will not be actuated. In the embodiment shown in the figures, some of the engagement elements 46 may have up to four arms 50a-d while others may only have one, two or three arms 50. Hence, the selector shaft 44 has four angular positions, wherein each angular position corresponds to one setting of the selector mechanism 42, i.e. to a predetermined number of knives 14 to be actuated.

In Fig. 2 and 3, the actuating mechanism 22 is in a first arrangement in which it is engaged with the selector mechanism 42, i.e. in an engaged configuration. In this configuration, however, the selector shaft 44 cannot be rotated in order to adjust the number of knives 14 to be actuated by the actuating mechanism 22. The actuating mechanism 22 may therefore be brought into a disengaged configuration, in which the actuating mechanism 22 is not engaged with the selector mechanism 42 to allow selection of the predetermined number of knives 14. In a preferred embodiment, the operating units 24 can be lifted as indicated by an arrow L in Fig. 3, thereby disengaging in the operating units 24 from the engagement elements 46. For example, the spring-loaded rods 30 of the operating units 24 are supported between an upper and a lower bar 51a, 51b extending in a direction perpendicular to the spring-loaded rods 30 and movably received in an elongated slot 53 provided in side plates 48 of the support structure 32. In the disengaged configuration, the selector shaft 44 can be rotated into a desired angular position in which a predetermined number of arms 50 is arranged to engage with the operating units 24 once the latter are moved back into the engaged configuration.

The crop cutting device 6 may further comprise a frame assembly 52 for mounting the crop cutting device 6 to the agricultural machine 2. In a preferred embodiment, the frame assembly 52 comprises a fixed frame 54, which may be attached to a frame of the agricultural machine 2, and a slidable frame 56, which is slidably mounted on the fixed frame 54.

The support structure 32 can, for example, be movably mounted to the fixed frame 54, as indicated by an elongated hole 58 extending parallel to the direction P of movement of the support structure 32 shown in Fig. 3. Preferably, the fixed frame 54 is pivotably mounted to the frame of the agricultural machine 2 to be movable between an upper operating position shown in Fig. 2 and a lower maintenance position.

The knife shaft 16 and the plurality of knives 14 are mounted on the slidable frame 56. The slidable frame 58 may be movable between a working position and a service position. In the working position, the plurality of knives 14 is aligned with the plurality of slots 18 in the crop guiding surface 12 and with the operating units 24, such that the plurality of knives 14 can be actuated and moved into the extended position. That is, the plurality of knives 14 is correctly received within the crop cutting device 6. In the service position, the slidable frame 56 may be drawn out of the crop cutting device 6 in a lateral direction (perpendicular to the plane of protection in Fig. 4 and 5) in order to access the plurality of knives 14 for maintenance and replacement. In the service position, the plurality of knives 14 is not aligned with the plurality of operating units 24.

According to the present invention, the crop cutting device 6 comprises a sensor arrangement comprising a plurality of sensors configured to monitor a configuration of the crop cutting device 6, in particular a configuration of the plurality of knives 14, a configuration of the actuating mechanism 22, and/or a configuration of the selector mechanism 42. For example, the configuration of the actuating mechanism 22 may include a position and/or orientation of a component, such as the rotatable component 36, of the actuating mechanism 22 indicating the position of the plurality of knives 14, and the configuration of the selector mechanism 42 may include a position and/or orientation of a component, such as the selector shaft 44, of the selector mechanism 42. In this way, the sensor arrangement may provide all information required to operate the crop cutting device 6. Preferred embodiments of the plurality of sensors will now be described.

The plurality of sensors may comprise a first sensor 60 configured to detect a position of at least some of the plurality of knives 14. The first sensor 60 is configured to provide an output signal indicating the position of at least some of the plurality of knives 14, in particular of the selected number of knives 14. Since the first sensor 60 is capable of providing this information, an operator of the agricultural machine 2 is, for example, not required to check in person whether all of the plurality of knives 14 are retracted before the selector mechanism 42 is operated, or if the plurality of knives 14 is correctly received within the crop cutting device 6 before the actuating mechanism 22 is operated.

Preferably, the first sensor 60 is configured to detect if the selected number of knives 14 is in the extended position, if at least some of the plurality of knives 14 are in an intermediate position between the extended position and the retracted position, if all of the plurality of knives 14 are in the retracted position, and/or if all of the plurality of knives 14 are correctly received within the crop cutting device 6. A preferred embodiment of the first sensor 60 allowing to acquire all this information by a single sensor, as well as its position and function will now be described with reference to Fig. 5 to 7.

In this embodiment, the first sensor 60 is configured to detect a configuration of the actuating mechanism 22 indicative of the position of at least some of the plurality of knives 14. Therefore, the first sensor 60 detects a position of the rotatable component 36 of the actuating mechanism 22 relative to the frame assembly 52. The first sensor 60 may be mounted on the rotatable component 36 and directed towards a detection region 62 on the frame assembly 52, in particular on the slidable frame 56. The rotational position of the rotatable component 36 indicates a configuration of the actuating mechanism 22 which is associated with a specific position of the selected knives 14.

For example, the rotatable component 36 and the first sensor 60 are positioned in a first rotational position I, in which the actuating mechanism 22 is in a first configuration and the plurality of knives 14 is in the retracted position as indicated in Fig. 6, and in a second rotational position II, in which the actuating mechanism 22 is in a second configuration and the selected number of knives 14 is in the extended position as indicated in Fig. 5. A third rotational position III, in which the actuating mechanism 22 is in an intermediate configuration and the selected number of knives 14 is in the intermediate position, is indicated in Fig. 6.

In the detection region 62, the slidable frame 56 may have three different levels. As can be seen in Fig. 7, the slidable frame 56 may have a stepped structure in the detection region 62, the stepped structure having a first level 64, a second level 66 and a third level 68. The stepped structure can, for example, be provided by plates 72a, 72b mounted on a side wall 70 of the slidable frame 56. Hence, the first sensor 60 detects a specific distance in each of the first rotational position I, the second rotational position II, and the third rotational position III. Each distance indicates a position of the rotatable element, which in turn indicates a configuration of the actuating mechanism and, thus, a position of at least some of the plurality of knives.

Preferably, the first sensor 60 is also configured to detect if the slidable frame 56 is in the working position and, consequently, the plurality of knives 14 is correctly received within the crop cutting device 6. If, for example, the first sensor 60 detects a distance different from the specific distances in the first, the second and the third rotational positions, or is not able to detect anything within its detection range, this would indicate that the slidable frame 56 is not in the working position but at least partially moved towards the service position.

The plurality of sensors may furthermore comprise a second sensor 78 schematically shown in Fig. 2. The second sensor 78 is configured to detect if the fixed frame 54 is arranged in the operating position. For example, the second sensor 78 may be directed towards a second detection region 80 on the fixed frame 54 and may detect a first distance, if the fixed frame 54 is in the upper operating position, and a second distance, if the fixed frame 54 is in the lower maintenance position.

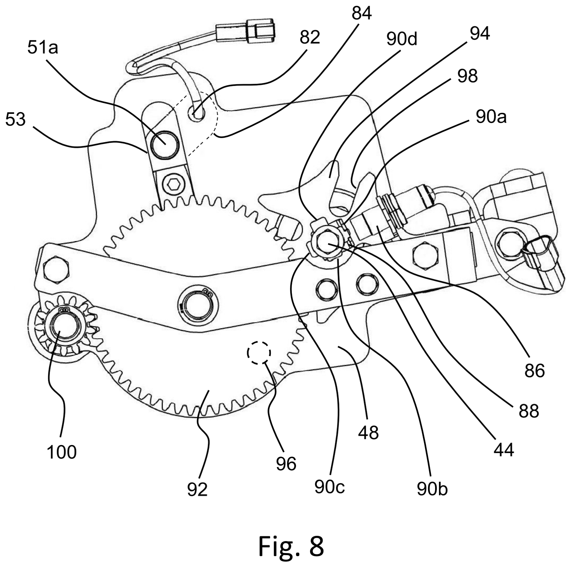

Moreover, the plurality of sensors may comprise a third sensor 82 schematically shown in Fig. 3. The third sensor 82 is configured to detect if the actuating mechanism 22 is in a first arrangement, in which the predetermined number of knives 14 to be rotated between the retracted position and the extended position is adjustable by means of the selector mechanism 42. For example, the third sensor 82 is configured to detect if the actuating mechanism 22 is in the disengaged configuration, in which the operating units 24 are lifted and the selector shaft 44 is freely rotatable. As shown in Fig. 3 and 8, the third sensor 82 may be mounted to the support structure 32 and directed towards a third detection region 84, in which e.g. the upper bar 51a is arranged in an upper position indicating that the operating units 24 are lifted into the disengaged configuration.

Referring now to Fig. 8, a fourth sensor 86 of the plurality of sensors will now be described. The fourth sensor 86 is configured to detect the predetermined number of knives 14 selected by the selector mechanism 42. In order to do so, the fourth sensor 86 may be able to detect an angular position of the selector shaft 44 corresponding to a setting of the selector mechanism 42 and, thus, a selected number of knives 14. In the present embodiment, the selector mechanism 42 may have four settings as described above. For example, a detection member 88 may be mounted on the selector shaft 44 to rotate with the selector shaft 44. The detection member 88 may have a plurality of radially extending protrusions 90, wherein the number of protrusions 90 corresponds to the number of settings of the selector mechanism 42. Each of the plurality of protrusions 90 may have a different dimension parallel to a radial direction of the selector shaft 44 and may be aligned with the fourth sensor 86 in the associated angular position of the selector shaft 44. As can be seen in Fig. 8, in one angular position of the selector shaft 44, the fourth sensor 86 is directed to a tip portion 90a to detect a distance between the sensor 86 and the tip portion 90a. In this way, the fourth sensor 86 may detect a different distance for each tip portion 90a, 90b, 90c, 90d of the plurality of protrusions 90 depending on the angular position of the selector shaft 44. That is, each distance indicates an angular position of the selector shaft and, thus, a setting of the selector mechanism and an associated number of selected knives.

In a manner known in the art, the selector mechanism 42 may comprise a drive wheel 92, e.g. in the form of a Geneva drive wheel, and a driven wheel 94, e.g. in the form of a Geneva driven wheel, coupled to the selector shaft 44. The drive wheel 92 may comprise at least one pin 96 configured to engage with a corresponding radial slot 98 of the driven wheel 94. A lifting mechanism for lifting the upper and lower bars 51a, 51b may be eccentrically coupled to the drive wheel 92 as well. The selector mechanism 42 may comprise drive means, such as a servomotor or a manual handle, to rotate the drive wheel 92, e.g. via sprocket 100.

The agricultural machine 2 may furthermore comprise a control unit 74 for controlling the actuating mechanism 22 schematically indicated in Fig. 5. If the selector mechanism 42 is automatically operated, the control unit 74 may also be configured to control the selector mechanism 42. The control unit 74 is communicatively coupled to the plurality of sensors 60, 78, 82, 86 and configured to control the actuating mechanism 22 and, if applicable, the selector mechanism 42 as a function of status signals received from the plurality of sensors and indicative of the configuration of the crop cutting device 6.

For example, the output signal of the first sensor 60 indicates that the plurality of knives 14 is correctly received within the crop cutting device 6 and all knives 14 are in the retracted position and the output signal of the third sensor 82 indicates that the actuating mechanism 22 is in the disengaged configuration. The control unit 74 may then provide a control signal to an actuator of the selector mechanism 42 to rotate the selector shaft 44 into a desired angular position to set the predetermined number of knives 14 to be actuated.

Likewise, the control unit 74 may provide a control signal to the actuator 34 of the actuating mechanism 22 to operate the actuating mechanism 22 and actuate the selected number of knives 14. Contamination of the crop cutting device 6 may, however, prevent the knives 14 from being fully extended resulting in the knives 14 and the actuating mechanism 22 getting stuck in the intermediate configuration. In this case, the control unit 74 may issue a warning to an operator of the agricultural machine 2.

A remote control and display device 76 is schematically shown in Fig. 1, which may be communicatively coupled to the control unit 74 and/or to the plurality of sensors 60, 78, 82, 86. The remote control and display device 76 may comprise a graphical user interface on which information on the crop cutting device status is displayed based on the status signals received from the control unit 74 and/or the plurality of sensors.

The remote control and display device 76 may be a handheld device and/or located in a cabin of a towing vehicle (not shown) of the agricultural machine 2. The device 76 may be configured to display sensor information to an operator. The operator may also be able to remotely control the crop cutting device 6 via user inputs on the remote control and display device 76. For example, the operator may be able to select a certain crop cutting device operation, such as "extend knives", on the remote control and display device 76. Should the control unit 74, based on the output signal of the plurality of sensors, determine that the plurality of knives 14 is not correctly received within the crop cutting device 6, the control unit 74 may not allow the operator to make a selection, e.g. by disabling the corresponding control panel on the device 76, or may not execute a command received from the device 76. Hence, operational safety can be increased by only allowing crop cutting device operations if the crop cutting device is in a configuration associated with the respective operation and by preventing any operation if this is not the case.

Further embodiments of the crop cutting device and the agricultural machine are apparent to the person skilled in the art based on the detailed description of preferred embodiments contained herein.

## Claims

1. A crop cutting device (6) for an agricultural machine (2), wherein the crop cutting device (6) comprises:
a crop guiding surface (12) defining a crop transport path (T) through the crop cutting device (6), wherein the crop guiding surface (12) has a plurality of slots (18) formed therein;
a plurality of knives (14) pivotally mounted on a knife shaft (16) to be rotatable between a retracted position and an extended position, wherein, in the extended position, the plurality of knives (14) extends further through the plurality of slots (18) and into the crop transport path (T) than in the retracted position;
an actuating mechanism (22) for rotating a predetermined number of knives (14) of the plurality of knives (14) between the retracted position and the extended position; and
a sensor arrangement comprising a plurality of sensors (60, 78, 82, 86) configured to monitor a configuration of the crop cutting device (6), in particular a configuration of the plurality of knives (14) and a configuration of the actuating mechanism (22).

2. The crop cutting device (6) according to claim 1, **characterized in that** the plurality of sensors (60, 78, 82, 86) comprises a first sensor (60) configured to detect a position of at least some of the plurality of knives (14), in particular if at least some of the plurality of knives (14) are arranged in the retracted position, in the extended position or in an intermediate position between the retracted position and the extended position.

3. The crop cutting device (6) according to claim 1 or 2, **characterized in that**, in a first configuration of the crop cutting device (6), the plurality of knives (14) is rotatable between the retracted position and the extended position by the actuating mechanism (22), and, in a second configuration of the crop cutting device (6), the plurality of knives (14) is not rotatable by the actuating mechanism (22), wherein the plurality of sensors (60, 78, 82, 86) is configured to detect if the crop cutting device (6) is in the first configuration.

4. The crop cutting device (6) according to claim 3, **characterized in that** the crop cutting device (6) comprises a fixed frame (54) and a slidable frame (56) slidably mounted on the fixed frame (54) to be movable between a working position and a service position, wherein the plurality of knives (14) is mounted on the slidable frame (56), and wherein the plurality of sensors (60, 78, 82, 86) is configured to detect if the slidable frame (56) is in the working position, in which the plurality of knives (14) is correctly received within the crop cutting device (6).

5. The crop cutting device (6) according to claim 4, **characterized in that** the fixed frame (54) is movable between an operating position and a maintenance position, wherein the plurality of sensors (60, 78, 82, 86) comprises a second sensor (78) configured to detect if the fixed frame (54) is arranged in the operating position.

6. The crop cutting device (6) according to any of the preceding claims, **characterized in that**, in a first arrangement of the actuating mechanism (22), the predetermined number of the plurality of knives (14) to be rotated between the retracted position and the extended position is adjustable, and, in a second arrangement of the actuating mechanism (22), the predetermined number of the plurality of knives (14) to be rotated between the retracted position and the extended position is not adjustable, wherein the plurality of sensors (60, 78, 82, 86) is configured to detect if the actuating mechanism (22) is in the first arrangement.

7. The crop cutting device (6) according to claim 6, **characterized in that** the crop cutting device (6) further comprises a selector mechanism (42) for selecting the predetermined number of knives (14) to be rotated by the actuating mechanism (22), wherein, in the first arrangement of the actuating mechanism (22), the actuating mechanism (22) is disengaged from the selector mechanism (42) to allow selection of the predetermined number of knives (14), and wherein the plurality of sensors (60, 78, 82, 86) comprises a third sensor (82) configured to detect if the actuating mechanism (22) is disengaged from the selector mechanism (42).

8. The crop cutting device (6) according to claim 7, **characterized in that** the actuating mechanism (22) comprises a plurality of operating units (24), each operating unit (24) being configured to rotate an associated knife (14) of the plurality of knives (14) between the retracted position and the extended position;
wherein, in an engaged configuration, the plurality of operating units (24) is engaged with the selector mechanism (42) for rotating the predetermined number of knives (14) between the retracted position and the extended position; and
wherein, in a disengaged configuration, the plurality of operating units (24) is disengaged from the selector mechanism (42) to adjust the predetermined number of knives (14) to be rotated by the plurality of operating units (24), and wherein the third sensor (82) is configured to detect if the plurality of operating units (24) is in the disengaged configuration.

9. The crop cutting device (6) according to claim 7 or 8, **characterized in that** the plurality of sensors (60, 78, 82, 86) comprises a fourth sensor (86) configured to detect the predetermined number of knives (14) selected by the selector mechanism (42).

10. The crop cutting device (6) according to claim 9, **characterized in that**, the selector mechanism (42) comprises a selector shaft (44), wherein an angular position of the selector shaft (44) is indicative of the predetermined number of knives (14) selected by the selector mechanism (42), and wherein the fourth sensor (86) is configured to detect the angular position of the selector shaft (44).

11. An agricultural machine (2), in particular square baler, a round baler, or a forage wagon, comprising a crop cutting device (6) according to any of the preceding claims.

12. The agricultural machine (2) according to claim 11, **characterized in that** the agricultural machine (2) comprises a control unit (74) for controlling the actuating mechanism (22), wherein the control unit (74) is communicatively coupled to the plurality of sensors, wherein the control unit (74) is configured to operate the actuating mechanism (22) as a function of status signals indicative of the configuration of the crop cutting device (6) received from the plurality of sensors and, preferably, as a function of a user input.

13. The agricultural machine (2) according to claim 12, **characterized in that** the control unit (74) is configured to:
allow operation of the actuating mechanism (22) only when the crop cutting device (6) is in a first configuration associated with the actuating mechanism (22) operation; and
prevent operation of the actuating mechanism (22) when the crop cutting device (6) is not in the first configuration.

14. The agricultural machine (2) according to any of claim 11 to 13 when depending on any of claims 7 to 10, **characterized in that** the agricultural machine (2) comprises a control unit (74) for controlling the selector mechanism (42), wherein the control unit (74) is communicatively coupled to the sensor arrangement;
wherein the control unit (74) is configured to operate the selector mechanism (42) as a function of status signals indicative of the configuration of the crop cutting device (6) received from the sensor arrangement and, preferably, as a function of a user input; and
wherein the control unit (74) is further configured to:
allow operation of the selector mechanism (42) only when the crop cutting device (6) is in a configuration associated with the selector mechanism (42) operation; and
prevent operation of the selector mechanism (42) when the crop cutting device (6) is not in the configuration associated with the selector mechanism (42) operation.

15. The agricultural machine (2) according to any of claims 11 to 14, **characterized in that** the control unit (74) is configured to provide a graphical user interface (76) with information on the crop cutting device (6) status based on the status signals.
